# EUROPEAN PATENT SPECIFICATION

(11) **EP 1 950 057 B1**
(45) Date of publication and mention of the grant of the patent: **26.05.2010**
(21) Application number: 06832871.5
(22) Date of filing: 17.11.2006
(51) Int. Cl.: B60C 5/00

(54) **FLEXIBLE POLYURETHANE FOAM FOR TIRE, NOISE REDUCTION DEVICE, AND TIRE**
FLEXIBLER POLYURETHAN-SCHAUMSTOFF FÜR REIFEN, RAUSCHUNTERDRÜCKUNGSVORRICHTUNG UND REIFEN
MOUSSE DE POLYURETHANE FLEXIBLE POUR PNEU, DISPOSITIF DE REDUCTION DE BRUIT ET PNEU

(30) Priority: 18.11.2005 JP 2005333568
(43) Date of publication of application: 30.07.2008
(73) Proprietor: The Yokohama Rubber Co., Ltd., Minato-ku Tokyo 105-8685 (JP); Kurashiki Boseki Kabushiki Kaisha, Kurashiki-shi Okayama 710-0054 (JP)
(72) Inventor: TANNO, Atsushi, Hiratsuka-shi Kanagawa 254-8601 (JP); TSUJIMOTO, Hiroyuki, Asakuchi-shi Okayama 719-0251 (JP)
(74) Representative: von Kreisler Selting Werner
(86) International application number: PCT/JP2006/322992
(87) International publication number: WO 2007/058311

(56) References cited:
- WO-A1-2006/117944
- JP-A- 2003 226 104
- JP-A- 2005 138 760

## Description

### TECHNICAL FIELD

The present invention relates to a flexible polyurethane foam for tires which is attached between the tire and the wheel rim, and in particular, relates to a flexible polyurethane foam for tires which is attached to the inner face of a tire by using a band member, a noise reducing device and a tire.

### BACKGROUND ART

In a pneumatic tire, one of the causes of noise generation is cavity resonance caused by vibrations of air filled in the inside of the tire. This cavity resonance is generated when, upon rolling a tire, a tread portion is vibrated by irregularities of a road surface, and the vibration of the tread portion vibrates air inside the tire.

With respect to a method for reducing noise due to such a cavity resonance phenomenon, a method has been proposed in which a sound absorbing material is placed in a cavity portion formed between a tire and a wheel rim (JP-A-64-78902 and JP-A-2005-104314). Specific examples of sound absorbing materials include urethane foam, sound absorbing felt, and foamed aluminum, and urethane foam is used in most cases.

In particular, JP-A-2005-104314 has disclosed urethane foam with a thermal conductive material mixed therein, which has a density adjusted in the range from 0.05 to 0.2 ^{.}g/cm³ (50 to 200 kg/m³). In such urethane foam, the density is set to a high level so as to prevent deformation, such as compression (permanent set in fatigue), by improving the toughness thereof. However, damages such as chips and cracks tend to occur in the urethane foam. It is not desirable to attach a member having a high density, that is, a heavy weight, to an inner face of a tire from viewpoints of fuel costs and traveling stability.

In recent years, as shown in JP-A-2003-226104 in order to improve the attaching performance of a sound absorbing material to an inner face of a tire, a method for attaching the sound absorbing material to the inner face of a tire by using a band member has been proposed. However, when the band member is used, a problem of chips, cracks or the like tends to occur frequently in the sound absorbing material.
JP-A-2005-138760 discloses a tire noise reducing system comprising a noise damper made of a porous material such as an open-cell type polyurethane foam. JP-A-2003-226104 discloses a noise reducing device installed in the inner tire cavity which comprises a foam having a very low specific gravity of 0.1 or less, preferably 0.05 or less, more preferably 0.005 or less.

### DISCLOSURE OF INVENTION

### PROBLEMS TO BE SOLVED BY THE INVENTION

An object of the present invention is to provide a flexible polyurethane foam for tires that can effectively suppress damages, such as chips and cracks, and deformation, such as compression (permanent set in fatigue), even when attached to a gap between a tire and a wheel rim, in particular, to an inner face of a tire by using a band member.

Another object of the present invention is to provide a noise reducing device and a tire, which can effectively suppress damages, such as chips and cracks, and deformation, such as compression (permanent set in fatigue), in flexible polyurethane foam for tires.

### MEANS TO SOLVE THE PROBLEMS

The present invention relates to noise reducing device for tires comprising a flexible polyurethane foam and a ring-shaped band member, wherein the flexible polyurethane foam is fixed to said ring-shaped band member and the flexible polyurethane foam has a density in the range of from 7 to 40 kg/m³ and a tear strength (N/cm) per unit density (kg/m³) in the range from 0.39 to 0.70.
In a preferred embodiment of the invention the number of cells is 25 cells/25 mm or more.
In a further preferred embodiment of the invention, said noise reducing device is attached to an inner face of the tire with said ring-shaped band member.
The invention further relates to the use of the device as defined above for suppressing damages and deformation of a tire.
In a preferred use of the device, the flexible polyurethane foam has 25 cells/ 25 mm or more.
In a further preferred use of the device, the device is attached to an inner face of the tire by use of the band member.

### EFFECTS OF THE INVENTION

The flexible polyurethane foam for tires of the present invention makes it possible to effectively suppress damages, such as chips and cracks, and deformation, such as compression (permanent set in fatigue), even when attached to a gap between a tire and a wheel rim, in particular, to an inner face of a tire by using a band member.
Since the flexible polyurethane foam for tires of the present invention is light in weight, a tire to which the polyurethane foam is attached does not impair a fuel cost performance and a traveling stability of a car.

### BRIEF DESCRIPTION OF DRAWINGS

Fig. 1 is an enlarged view showing an essential portion of one example of a tire in which a flexible urethane foam for tires of the present invention is attached to the inner face thereof.
Figs. 2(A) to 2(D) are schematic sketch views each showing one example of a noise reducing device having the flexible urethane foam for tires of the present invention.
Fig. 3(A) is an enlarged view showing an essential portion of a tire provided with the noise reducing device shown in Fig. 2(A), and Fig. 3(B) is an enlarged view showing an essential portion of a tire provided with the noise reducing device shown in Fig. 2(B).

### EXPLANATION OF REFERENCE NUMERALS

1: Tread portion, 2: Bead portion, 3: Side wall portion, 5: Flexible polyurethane foam (PU foam) for tires, 6: Ring-shaped band, 7: Coupling portion, 10:10a:10b: Tire, 20a:20b:20c:20d: Noise reducing device

### BEST MODE FOR CARRYING OUT THE INVENTION

The tear strength (unit; N/cm) per unit density (kg/m³) of flexible polyurethane foam for tires of the present invention is from 0.39 to 0.70, preferably from 0.40 to 0.65. In the present invention, by setting the tear strength per unit density to the above-mentioned range, damages, such as chips and cracks, and deformation, such as compression (permanent set in fatigue), can be effectively suppressed even when the density is comparatively low. Hereinafter, the flexible polyurethane foam for tires of the present invention is referred to simply as "PU foam".

The tear strength per unit density is a value calculated based on measured density and tear strength, and obtained by dividing the tear strength by the density. In the case when this value is too small, even if a comparatively high value is achieved as the tear strength, damages, such as chips and cracks, tend to occur, and the resulting foam fails to withstand the use as a tire. A detailed mechanism has not been clarified, in which damages occur in the case when the tear strength per unit density is smaller than the above-mentioned range, even if the tear strength is comparatively large. However, the following mechanism is presumed: For example, when the tear strength per unit density is comparatively low and the tear strength is comparatively high, the density is comparatively high. In general, when the density is high, damages hardly occur, and when the tear strength is also high, it is considered that damages more hardly occur. However, in a portion which rolls at a high speed, such as the inside of a tire, even when the tear strength is comparatively high, the increase in density serves as a factor that causes damages against the general principle. Consequently, it is considered that when the tear strength per unit density is smaller than the above-mentioned range, damages tend to occur even if the tear strength is comparatively high.

In the present specification, a value measured in accordance with JIS K7222 is used as the density; however, not limited by the measurements in accordance with this standard, any method may be used for the measurements as long as it can measure in accordance with the same principle and rule as the above-mentioned standard.

The density of the PU foam of the present invention is 7 to 40 kg/m³, preferably 10 to 30 kg/m³. In general, in the case when the density is made lower, it has been known that, since the mechanical strength of the PU foam is lowered, damages tend to occur; however, in the present invention, even if the density is set to a comparatively small level, the damages to the PU foam can be suppressed effectively.

With respect to the tear strength, the value, measured in accordance with JIS K6400-5 by using a test piece with its shape being formed into "an angle-shape without a notch", is used.

The tear strength of the PU foam of the present invention is not particularly limited as long as the above-mentioned tear strength per unit density is achieved, and is in the range from 3 to 28N/cm, in particular, preferably from 3 to 24N/cm. Only high tear strength does not sufficiently complete the present invention. In other words, even when a comparatively high value is achieved in the tear strength, damages, such as chips and cracks, tend to occur unless the tear strength per unit density is within the above-mentioned range.

The number of cells of the PU foam of the present invention is not particularly limited as long as the above-mentioned tear strength per unit density has been achieved. From the viewpoint of increasing the tear strength per unit density by reducing the density, the number of cells is preferably 25 cells/25 mm or more. The number of cells is defined by the number of cells per 25 mm.

The value, measured in accordance with attached document 1 of JIS K6400-1, is used as the number of cells.

The PU foam of the present invention is obtained, for example, by the following method: That is, a urethane foam material composition containing at least a polyol component, a polyisocyanate component and a foaming agent as well as additives, such as a foam-adjusting agent, a catalyst, a crosslinking agent, an antioxidant, a UV-ray absorbing agent and a colorant, if necessary, is allowed to react to foam by using a known manufacturing method, such as a one shot method. For example, in the one shot method, simultaneously as the respective components are added to a mixing chamber at the same time, a strong stirring process is carried out to mix the components to produce PU foam.

The density, the tear strength and the number of cells of the PU foam can be controlled by adjusting the kinds and added amounts of the polyol component, polyisocyanate component, foaming agent and foam-adjusting agent, the degree of stirring of the material and the pressure and the like of the mixing chamber, the material supply tank and the pipes.

The PU foam is mainly classified into polyester urethane foam, polyether urethane foam and polyester ether urethane foam depending on the kinds of polyol component, which is a main material. In the present invention, any of these PU foam may be used. From the viewpoint of controlling the tear strength per unit density, polyester urethane foam and polyether urethane foam are preferably used.

Since the polyester urethane foam can achieve the above-mentioned tear strength per unit density even when it has comparatively high tear strength and comparatively high density, those having a density in the range from 18 to 40 kg/m³ are preferably used. With respect to the polyester urethane foam, when the density is less than 18 kg/m³, deformation, such as compression (permanent set in fatigue), tends to occur. In contrast, the density exceeding 40 kg/m³ is not desirable because its own weight increases excessively. In particular, the desirable density is from 18 to 30 kg/m³. The polyester urethane foam is easily controlled in its number of cells, and from the viewpoint of reducing the density properly by increasing the number of cells to consequently increase the tear strength per unit density, those having a large number of cells, that is, 25 cells/25 mm or more, are preferably used, and in particular, those having cells in the range of 40 to 100 are more preferably used. With respect to the polyester urethane foam, when the number of cells is less than 25 cells/25 mm, there is a reduction in the tear strength, with the result that the above-mentioned tear strength per unit density is hardly achieved. In contrast, in the case when the number of cells exceeds 100 cells/25 mm, the production stability is lowered although no problems arise in the performances.

Since the polyether urethane foam is superior in the production stability and foams in a wide range can be stably produced, those having a density in the range from 7 to 20 kg/m³ are preferably adopted. With respect to the polyether urethane foam, when the density is less than 7 kg/m³, damages tend to occur due to insufficient mechanical strength. In contrast, the density exceeding 18 kg/m³ reduces the tear strength per unit density, resulting in damages. In particular, the desirable density is from 10 to 18 kg/m³. From the viewpoint of easiness for control, the number of cells of the polyether urethane foam is preferably 25 or more, in particular, in the range from 30 to 80.

With respect to the polyol component to be used for producing the PU foam of the present invention, any of those components may be used as long as they have two or more hydroxide groups in one molecule, and are conventionally used for producing polyurethane foam. Examples of the polyol component include polyether polyol, polyester polyol and polyester ether polyol. One kind or two or more kinds of the polyol components may be used in combination.

Polyether polyol is a polyol component to be used for producing polyether urethane foam, and such a material, prepared by addition polymerizing an alkylene oxide using a compound having two or more active hydrogen atoms in one molecule as an initiator, may be used. Examples of the compound having two or more active hydrogen atoms to be used in this case include ethylene glycol, propylene glycol, glycerin, trimethylol propane, triethernol amine, pentaerythritol, sorbitol, sucrose, and the like. Examples of the alkylene oxide include ethylene oxide, propylene oxide, and the like. With respect to the compound having two or more active hydrogen atoms in one molecule and alkylene oxide, one kind or more of those may be respectively used. Glycerin-based polyether polyol is preferably used as the polyether polyol, and in particular, a material, prepared by addition polymerizing propylene oxide using glycerin as an initiator, may be preferably used.

Vinyl-based polymer fine particles may be evenly dispersed in polyether polyol. Examples of a vinyl-based polymer include a polymer obtained by polymerizing a vinyl-based monomer such as acrylonitrile and styrene and a copolymer obtained by copolymerizing a vinyl-based monomer with a monomer that is copolymerizable with the vinyl-based monomer.

Polyester polyol is a polyol component to be used for producing polyester urethane foam, and is obtained by polycondensing a polycarboxylic acid with a compound having two or more hydroxide groups in one molecule. A compound having two or more carboxyl groups in one molecule is used as the polycarboxylic acid, and specific examples thereof include adipic acid, maleic acid, succinic acid, malonic acid, phthalic acid, and the like. With respect to the compound having two or more hydroxyl groups in one molecule, the same compounds as those compounds having two or more active hydrogen atoms to be used as the initiator for the polyether polyol may be used. With respect to the polycarboxylic acid and the compound having two or more hydroxyl groups in one molecule, one kind or more of those may be respectively used. Polyester polyol can be produced by using a known method.

Polyester ether polyol is a polyol component to be used for producing polyester ether urethane foam, and for example, it is obtained by dehydration-condensing a semi-ester produced by allowing dicarboxylic anhydride, such as phthalic anhydride, to react with the above-mentioned polyether polyol, or is obtained by adding epoxide to such a semi-ester in the presence of a basic catalyst or the like.

The polyisocyanate component is not particularly limited as long as it is a compound having two or more isocyanate groups in one molecule, and is prepared by mixing, for example, one kind or two or more kinds of aliphatic or aromatic polyisocyanates. Examples of aliphatic polyisocyanates include hexamethylene diisocyanate, isophorone diisocyanate, and the like. Specific examples of aromatic polyisocyanates include: 2,4-tolylene diisocyanate, 2,6-tolylene diisocyanate, a mixture of 2,4-tolylene diisocyanate and 2,6-tolylene diisocyanate, diphenylmethane diisocyanate, polymethylene polyphenyl diisocyanate, and the like. Here, the one normally used preferably is a mixture (TDI-80, TDI-65) of 2,4-tolylene diisocyanate and 2,6-tolylene diisocyanate, or diphenylmethane diisocyanate.

With respect to the foaming agent, those agents, conventionally used as a foaming agent in the field of polyurethane foam, may be used, and only water is preferably used from the viewpoint of environmental protection. Since water is allowed to react with polyisocyanate to generate carbon dioxide gas, water is used as a chemical foaming agent. Normally, the amount of the foaming agent to be used is preferably in the range from 1 to 7 parts by mass with respect to 100 parts by mass of the polyol component, and from the viewpoint of achieving the density of the present invention, it is preferably in the range from 2 to 6 parts by mass. A physical foaming agent may be used as the foaming agent on demand. Examples of the physical foaming agent include: methylene chloride, chlorofluorocarbons, hydroxychlorofluorocarbons (HCFC-134a and the like), hydrocarbons (cyclopentene and the like), carbon dioxide gas and liquefied carbon dioxide gas, and other foaming agents may be used as foaming assistants in combination with water. The amount of use of the physical foaming agent is preferably 20 parts by mass or less with respect to 100 parts by mass of a polyol component from the viewpoint of stabilizing foaming, and in particular, is preferably 10 parts by mass or less so as not to extremely reduce the tear strength.

With respect to the catalyst and the foam adjusting agent, those generally used for producing flexible polyurethane foam may be used, and the added amount is also an amount normally adopted upon producing flexible polyurethane foam. In the present invention, in addition to the above-mentioned additive components, other additives, such as a flame retarder, an antioxidant, a colorant and a ultraviolet-ray absorbing agent, may be added within such a range as not to impair the performance of the flexible polyurethane foam of the present invention.

Such PU foam is available, for example, as commercial products, "Kuralafoam" series made by Kurabo Industries Ltd., or the like.

The PU foam of the present invention is used as a so-called noise reducing material that is attached to a gap between a tire and a wheel rim, in particular, to the inner face of a tire, so as to suppress cavity resonance generated at the time of rolling of the tire.

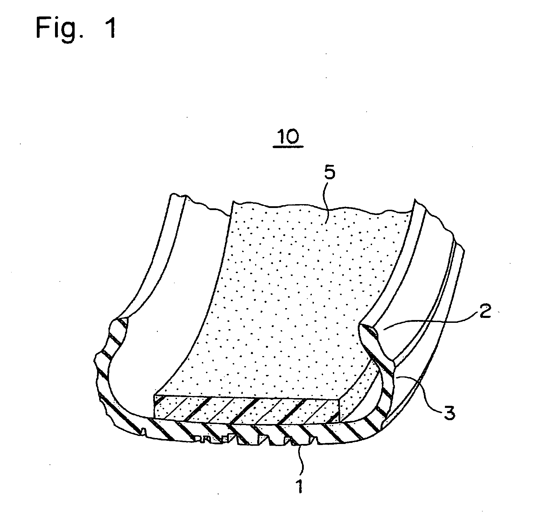

Fig. 1 is an enlarged view of an essential portion showing one example of a tire in which the PU foam of the present invention is attached to the inner face thereof. In Fig. 1, a tire 10 is provided with a tread portion 1, a pair of right and left bead portions 2 and a side wall portion 3 that couples the tread portion 1 and each bead portion 2 with each other, and PU foam 5 of the present invention is attached to the inner face of the tread portion 1. Here, a band member, which will be described in detail later, is not shown in Fig. 1.

Although not particularly limited, the shape of the PU foam is preferably designed to have a thickness in the range from 3 to 30 mm, more preferably from 5 to 15 mm, by taking it into consideration that upon attaching, the band member is used. When the thickness is less than 3 mm, the attaching property to the band member is lowered. The thickness exceeding 30 mm causes an increase in the surface stress in response to a forceful dislocation due to antiplane bending, and tends to cause chips or cracks. The width ranges from 50 to 150% of the maximum width of an reinforcing layer placed on the peripheral side of a carcass layer of a tire, that is, a so-called belt layer, more preferably 80 to 130% thereof. Here, the width of the PU foam member corresponds to the length of the PU foam member attached to the tire in the tire rotary axis direction.

With respect to the attaching method for the PU foam member, not particularly limited as long as the PU foam member is attached to the inner face of the tire, for example, (1) a method for attaching the PU foam member directly to the tire inner face by using a bonding agent or an adhesive tape, and (2) a method for attaching the PU foam member to the tire inner face by using a band member may be used. Preferably, the above-mentioned method (2) is adopted. When generally-used urethane foam is attached by using a band member, damages, such as chips and cracks, often occur in the urethane foam; however, the present invention makes it possible to effectively suppress such damages even in the case of using such a band member, in particular, a ring-shaped band member. Here, by taking it into consideration the attaching property to the band member, the hardness of PU foam is preferably about 60 to 150N, in particular, to 80 to 120N for better operability. Here, the hardness is a value measured in accordance with JIS K 6400-2: D method.

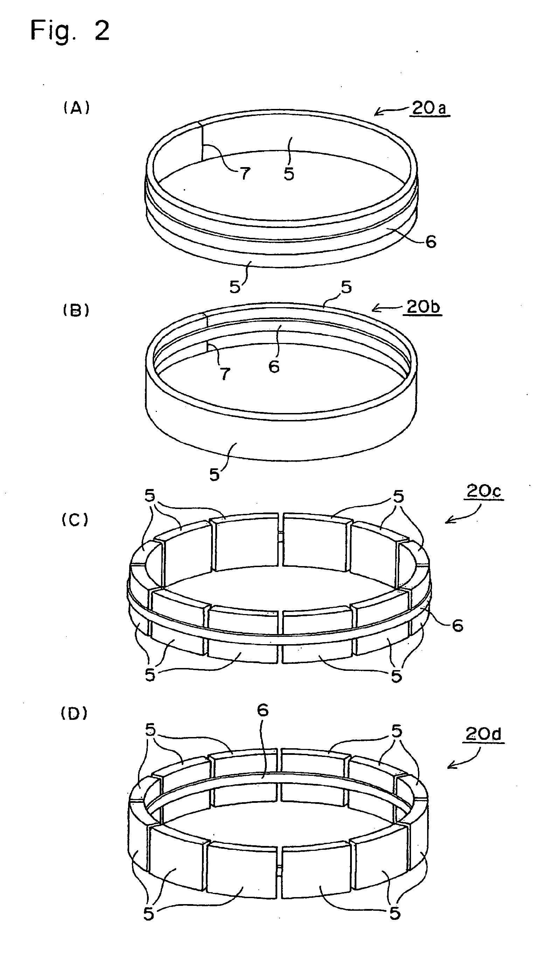

Upon adopting the above-mentioned method (2), the PU foam is fixed to a band member to form a noise reducing device. More specifically, the noise reducing device has a structure in which the PU foam is fixed to the ring-shaped band member. Specific examples of the noise reducing device are shown in Figs. 2(A) to 2(D). In Figs. 2(A) to 2(D), the same reference numerals and symbols indicate the same members.

In Fig. 2(A), a noise reducing device 20a has PU foam 5 that is continuously attached to the entire inner circumferential face of a ring-shaped band member 6, and normally, the PU foam 5 is provided with a coupling portion 7.
In Fig. 2(B), a noise reducing device 20b has the PU foam 5 that is continuously attached to the entire outer circumferential face of a ring-shaped band member 6, and normally, the PU foam 5 is provided with a coupling portion 7.

In Fig. 2(C), a noise reducing device 20c is constituted by twelve divided pieces 5 of the PU foam, and these divided pieces are placed side by side in the circumferential direction onto the inner circumferential face of the ring-shaped band member 6. In this case, a gap is preferably placed between the respective divided pieces. Thus, no bonding portions between the mutual urethane pieces are present, thereby eliminating the necessity of a bonding agent. By placing the pieces of the PU foam with virtually equal intervals, the weight balance in the circumferential direction can be maintained evenly. In Fig. 2(C), the number of the divided pieces of the PU foam is twelve; however, not particularly limited by this, the number may be set, for example, from 3 to 20.

In Fig. 2(D), a noise reducing device 20d is constituted by twelve divided pieces of the PU foam 5, and these divided pieces are placed side by side in the circumferential direction onto the outer circumferential face of the ring-shaped band member 6. In this case, for the same reason as that of Fig. 2(C), a gap is preferably placed between the respective divided pieces. By placing the pieces of the PU foam with virtually equal intervals, the weight balance in the circumferential direction can be maintained evenly. In Fig. 2(D), the number of the divided pieces of the PU foam is twelve; however, not particularly limited by this, the number may be set, for example, from 3 to 20.

It is only necessary for the ring-shaped band member forming the noise reducing device to be made from a material having an elastic recovering force, and from the viewpoint of moldability into the ring shape, it is preferably made from a thermoplastic resin, in particular, polypropylene. When the band member is made from a thermoplastic resin, by thermally fusing to adhere the two ends of a string-shaped band member to each other, the ring-shaped band member can be easily molded.

The securing of the PU foam to the band member may be carried out by any means, and, for example, the securing may be achieved by using a bonding agent or an adhesive tape, or a resin layer, made from a thermoplastic resin such as polypropylene, is preliminarily formed on the contact face of the PU foam to the band member so that the securing process may be achieved by using thermal fusion of the resin layer. In the latter case, the thermal fusion of the resin layer is preferably carried out by using an ultrasonic wave welding machine.

Upon using any one of the securing means, the securing process between the PU foam and the band member may.be conducted over the entire contact face between the PU foam and the band member, or may be locally carried out on the contact face.

The dimensions of the noise reducing device, that is, the dimensions of the ring-shaped band member and the PU foam, are not particularly limited as long as the PU foam is attached to and held on the inner face of a tire, in particular, on the tread portion thereof, and is allowed to exert a noise reducing effect. In particular, in the case when the ring-shaped band member is formed into a true circle, the diameter is normally made virtually equal to, or smaller than the inner diameter of a tire to which it is attached.

Upon manufacturing the noise reducing device, after the PU foam has been fixed onto a predetermined position of the string-shaped band member, the two ends of the string-shaped band member may be coupled to each other through thermal fusion or the like, or after the two ends of the string-shaped band member have been coupled to each other by using thermal fusion or the like, the PU foam may be fixed to a predetermined position of the resulting ring-shaped band member.

Even in the case when the noise reducing device is inserted into a tire while being deformed by an external force, upon removal of the external force, the ring-shaped band member is allowed to restore its shape so as to continuously extend along the tire circumferential direction because the ring-shaped band member has an elastic restoring force. As a result, the noise reducing device is held on the tire inner face so that the PU foam is attached and held onto the tire inner face, in particular, onto the inner face of the tread portion. The noise reducing device is freely detachably attached to the tire, and its attaching and detaching processes can be easily carried out.

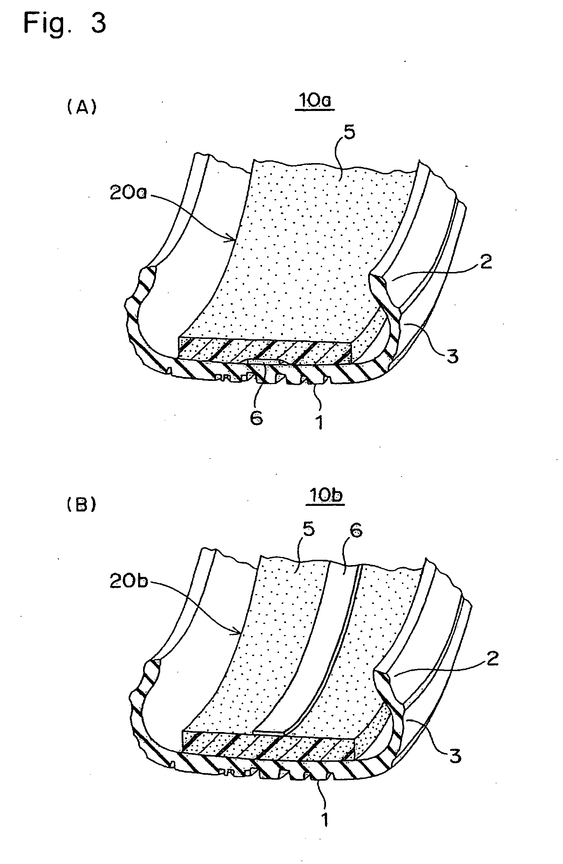

Fig. 3(A) is an enlarged view showing an essential portion of a tire 10a provided with a noise reducing device 20a shown in Fig. 2(A). Since the noise reducing device 20a shown in Fig. 2(A) has PU foam 5 on the inner circumferential face of a ring-shaped band member 6, the ring-shaped band member 6 is placed between the PU foam 5 and the tread portion 1, as shown in Fig. 3(A), when attached to a tire. In a tire provided with the noise reducing device 20c shown in Fig. 2(C), the enlarged view showing an essential portion having the PU foam is virtually the same as that of Fig. 3(A).

Fig. 3(B) is an enlarged view showing an essential portion of a tire 10b provided with the noise reducing device 20b shown in Fig. 2(B). Since the noise reducing device 20b shown in Fig. 2(B) has the PU foam 5 on the outer circumferential face of a ring-shaped band member 6, the ring-shaped band member 6 is placed on the PU foam 5, as shown in Fig. 3(B), when attached to a tire. In a tire provided with the noise reducing device 20d shown in Fig. 2(D), the enlarged view showing an essential portion having the PU foam is virtually the same as that of Fig. 3(B).

### EXAMPLES

### (Example 1)

Commercially available polyurethane foam ("Kuralafoam 281", made by Kurabo Industries Ltd.) was used. The flexible polyurethane foam was cut into 12 pieces so that twelve board-shaped polyurethane foams having a size of 150 mm in width × 20 mm in thickness × 140 mm in length were prepared.

Next, a noise reducing device of a type shown in Fig. 2(C) was manufactured. Specifically, twelve board-shaped polyurethane foam members are placed at predetermined positions of a string-shaped band member (20 mm in width × 2 mm in thickness × Tire inner circumferential length) made from polypropylene, with equal intervals, and fixed thereto by using a bonding agent (Super X: made by Cemedine Co., Ltd.), and the two ends of the string-shaped band member were connected to each other through fusion splicing.

### (Examples 2 to 3 and Comparative Examples 1 and 2)

The same method as that of Example 1 was carried out except that each of the following commercial products was used as the polyurethane foam so that a noise reducing device was manufactured.
Example 2 "Kuralafoam 241 (made by Kurabo Industries Ltd.)";
Example 3 "Kuralafoam 38M8S (made by Kurabo Industries Ltd.)";
Example 4 "Kuralafoam 38M4K (made by Kurabo Industries Ltd.)";
Example 5 "Kuralafoam 311SS (made by Kurabo Industries Ltd.)";
Comparative Example 1 "Kuralafoam 330NC (made by Kurabo Industries Ltd.)";
Comparative Example 2 "Kuralafoam 38H2 (made by Kurabo Industries Ltd.)"

### (Evaluation)

### • Damage

Each of the noise reducing devices of Examples and Comparative Examples was attached to a tire having a tire size of 215/55R16. More specifically, the noise reducing device was inserted into the cavity portion inside a tire while being deformed by an externally applied force, and by removing the external force, the ring-shaped band member is restored so as to continuously extend in the tire circumferential direction so that the polyurethane foam was attached and held onto the inner face of the tread portion. The tire with the noise reducing device attached thereto was driven on a drum testing machine under a pneumatic pressure of 120 kPa, a load of 8.1N, an ambient temperature of 38 ± 3°C, a drum diameter φ of 1707 mm and a velocity of 81 km/h for 80 hours. Thereafter, the noise reducing device was taken out of the tire, and visually inspected for any chips or cracks of all the board-shaped polyurethane foams, and evaluation was made in accordance with the following criteria.
©: None of chips and cracks were observed;
○: Chips and cracks were slightly observed; however, the chipped pieces were less than 10 mm in the maximum length and the cracked portions were less than 5 mm in depth, and there were no practical problems.
x: Chips and cracks were observed, and the chipped pieces were in the range from 10 mm or more to less than 30 mm in the total length, and the cracked portions were in the range from 5 mm or more to less than 10 mm, and there were practical problems; and
xx: Chips and cracks observed, and the chipped pieces were 30 mm or more in the total length, and the cracked portions were 10 mm or more in depth.

With respect to the damages, detailed portions of occurrence are shown below.
In Example 1, chips and slight cracks were observed on the corner portions and side end portions.
In Example 2, none of chips and cracks was observed on the corner portions and side end portions.
In Example 3, none of chips and cracks was observed on the corner portions and side end portions.
In Example 4, although slight chips were observed in only one portion of the corner portion, none of chips and cracks was observed in the other portions.
In Example 5, although a chip was observed in only one portion of the corner portion, none of chips and cracks was observed in the other portions.
In Comparative Example 1, a deep crack was observed in a corner portion, and several large chipped portions were observed on side end portions.
In Comparative Example 2, a large chipped portion was observed in a corner portion.

**[Table 1]**

| Material | Example 1 | Example 2 | Example 3 | Comparative Example 1 | Comparative Example 2 | Example 4 | Example 5 |
|---|---|---|---|---|---|---|---|
| foam Type | Ether | Ether | Ester | Ether | Ester | Ester | Ether |
| Density (Kg/m³) | 18 | 14 | 28 | 23 | 28 | 28 | 20 |
| Tear Strength (N/cm) | 6 | 6 | 12 | 5 | 8 | 11 | 7 |
| Tear Strength/Density | 0.33 | 0.43 | 0.43 | 0.22 | 0.29 | 0.39 | 0.35 |
| The Number of Cell (per 25mm) | 50 | 43 | 50 | 40 | 28 | 40 | 41 |
| Damage | ○ | Ⓞ | Ⓞ | × × | × | ○ | ○ |

The density, the tear strength and the number of cells were measured by using the aforementioned methods.

### INDUSTRIAL APPLICABILITY

The flexible polyurethane foam of the present invention is useful for a noise reducing material to be attached to a gap between a tire and a wheel rim, in particular, to the inner face of the tire.

## Claims

1. A noise reducing device for tires comprising a flexible polyurethane foam and a ring-shaped band member, wherein the flexible polyurethane foam is fixed to said ring-shaped band member and the flexible polyurethane foam has a density in the range of from 7 to 40 kg/m³ and a tear strength (N/cm) per unit density (kg/m³) in the range from 0.39 to 0.70.

2. The noise reducing device of claim 1, wherein the number of cells is 25 cells/25 mm or more.

3. A tire comprising the noise reducing device of claim 1 or 2, wherein said noise reducing device is attached to an inner face of the tire with said ring-shaped band member.

4. Use of the device as defined in claim 1 or 2 for suppressing damages and deformation of a tire.

5. The use of claim 4, wherein the flexible polyurethane foam has 25 cells/25 mm or more.

6. The use of claim 4 or 5, wherein the device is attached to an inner face of the tire by use of the band member.

## Patentansprüche

1. Geräuschreduzierende Vorrichtung für Reifen, die einen Polyurethan-Weichschaum und ein ringförmiges Bandelement umfasst, wobei der Polyurethan-Weichschaum an dem ringförmigen Bandelement befestigt ist und der Polyurethan-Weichschaum eine Dichte im Bereich von 7 bis 40 kg/m³ und eine Reißfestigkeit (N/cm) pro Dichteeinheit (kg/m³) im Bereich von 0,39 bis 0,70 aufweist.

2. Geräuschreduzierende Vorrichtung gemäß Anspruch 1, wobei die Zahl der Zellen 25 Zellen/25 mm oder mehr beträgt.

3. Reifen, der die geräuschreduzierende Vorrichtung gemäß Anspruch 1 oder 2 umfasst, wobei die geräuschreduzierende Vorrichtung mit dem ringförmigen Bandelement an einer Innenfläche des Reifens befestigt ist.

4. Verwendung der Vorrichtung gemäß Anspruch 1 oder 2 zur Unterdrückung der Beschädigung und Verformung eines Reifens.

5. Verwendung gemäß Anspruch 4, wobei der Polyurethan-Weichschaum 25 Zellen/25 mm oder mehr aufweist.

6. Verwendung gemäß Anspruch 4 oder 5, wobei die Vorrichtung unter Verwendung des Bandelements an einer Innenfläche des Reifens befestigt ist.

## Revendications

1. Dispositif réducteur de bruit pour pneus, comprenant une mousse de polyuréthane souple et un élément de bande en forme d'anneau, dans lequel la mousse de polyuréthane souple est fixée audit élément de bande en forme d'anneau et la mousse de polyuréthane souple a une densité de l'ordre de 7 à 40 kg/m³ et une résistance à la rupture (N/cm) par unité de densité (kg/m³) de l'ordre de 0,39 à 0,70.

2. Dispositif réducteur de bruit selon la revendication 1, dans lequel le nombre de cellules est 25 cellules/25 mm ou plus.

3. Pneu comprenant le dispositif réducteur de bruit selon la revendication 1 ou 2, dans lequel ledit dispositif réducteur de bruit est attaché à une surface intérieure du pneu avec ledit élément de bande en forme d'anneau.

4. Utilisation du dispositif selon la revendication 1 ou 2 pour supprimer les dommages et la déformation d'un pneu.

5. Utilisation selon la revendication 4, dans laquelle la mousse de polyuréthane souple a 25 cellules/25 mm ou plus.

6. Utilisation selon la revendication 4 ou 5, dans laquelle le dispositif est attaché à une surface intérieure du pneu au moyen de l'élément de bande.
